# FASCICULE DE BREVET EUROPEEN

(11) **EP 1 451 634 B1**
(45) Date de publication et mention de la délivrance du brevet: **26.03.2008**
(21) Numéro de dépôt: 02804247.1
(22) Date de dépôt: 04.12.2002
(51) Int. Cl.: G02F 1/01, G02F 1/00, H01L 31/0224

(54) **ELECTRODE DE DISPOSITIFS ELECTROCHIMIQUES ET/OU ELECTROCOMMANDABLES**
ELEKTRODE FÜR ELEKTROCHEMISCHE UND/ODER ELEKTRISCH-STEUERBARE VORRICHTUNGEN
ELECTROCHEMICAL/ELECTRO-CONTROLLABLE DEVICE ELECTRODE

(30) Priorité: 05.12.2001 FR 0115687
(43) Date de publication de la demande: 01.09.2004
(73) Titulaire: SAINT-GOBAIN GLASS FRANCE, 92400 Courbevoie (FR)
(72) Inventeur: BETEILLE, Fabien, 31250 Revel (FR); FANTON, Xavier, F-93600 Aulnay-sous-Bois (FR); GIRON, Jean-Christophe, D-52074 Aachen (DE)
(74) Mandataire: Colombier, Christian
(86) Numéro de dépôt international: PCT/FR2002/004172
(87) Numéro de publication internationale: WO 2003/048843

(56) Documents cités:
- US-A- 5 202 788
- US-B1- 6 277 523
- CHOPRA K L ET AL: "TRANSPARENT CONDUCTORS A STATUS REVIEW" THIN SOLID FILMS, ELSEVIER-SEQUOIA S.A. LAUSANNE, CH, vol. 102, 1983, pages 1-46, XP000573894 ISSN: 0040-6090

## Description

La présente invention a pour objet un dispositif électrochimique, et/ou électrocommandable du type vitrage et à propriétés optiques et/ou énergétiques variables, ou un dispositif photovoltaïque, ou encore un dispositif électroluminescent.

Il y a en effet actuellement une demande accrue pour des vitrages dits " intelligents " aptes à s'adapter aux besoins des utilisateurs.

Il existe aussi une demande accrue pour les vitrages photovoltaïques, qui permettent de convertir l'énergie solaire en énergie électrique, ainsi que pour les vitrages électroluminescents qui ont des applications intéressantes dans les appareils d'affichage et en tant que surfaces éclairantes.

En ce qui concerne les vitrages " intelligents ", il peut s'agir du contrôle de l'apport solaire à travers des vitrages montés en extérieur dans des bâtiments ou des véhicules du type automobile, train ou avion. Le but est de pouvoir limiter un échauffement excessif à l'intérieur des habitacles/locaux, mais uniquement en cas de fort ensoleillement.

Il peut aussi s'agir du contrôle du degré de vision à travers des vitrages, notamment afin de les obscurcir, de les rendre diffusant voire d'empêcher toute vision quand cela est souhaitable. Cela peut concerner les vitrages montés en cloisons intérieures dans les locaux, les trains, les avions ou montés en vitres latérales d'automobile. Cela concerne aussi les miroirs utilisés comme rétroviseurs, pour éviter ponctuellement au conducteur d'être ébloui, ou les panneaux de signalisation, pour que des messages apparaissent quand cela est nécessaire, ou par intermittence pour mieux attirer l'attention. Des vitrages que l'on peut rendre à volonté diffusants peuvent être utilisés quand on le souhaite comme écrans de projection.

Il existe différents systèmes électrocommandables permettant ce genre de modifications d'aspect/de propriétés thermiques.

Pour moduler la transmission lumineuse ou l'absorption lumineuse des vitrages, il y a les systèmes dits viologènes, comme ceux décrits dans les brevets US-5 239 406 et EP-612 826.

Pour moduler la transmission lumineuse et/ou la transmission thermique des vitrages, il y a aussi les systèmes dits électrochromes. Ceux-ci, de manière connue, comportent généralement deux couches de matériau électrochrome séparées par une couche d'électrolyte et encadrées par deux couches électroconductrices. Chacune des couches de matériau électrochrome peut insérer réversiblement des cations et des électrons, la modification de leur degré d'oxydation suite à ces insertions/désinsertions conduisant à une modification dans ses propriétés optiques et/ou thermiques. On peut notamment moduler leur absorption et/ou leur réflexion dans les longueurs d'onde du visible ou du spectre solaire.

Il est d'usage de ranger les systèmes électrochromes en trois catégories :
➢ celle où l'électrolyte est sous forme d'un polymère ou d'un gel ; par exemple un polymère à conduction protonique comme ceux décrits dans les brevets EP-253 713 ou EP-670 346, ou un polymère à conduction d'ions lithium comme ceux décrits dans les brevets EP-382 623, EP-518 754 et EP-532 408 ; les autres couches du système étant généralement de nature minérale,
➢ celle où l'électrolyte est une couche essentiellement minérale. On désigne souvent cette catégorie sous le terme de système " tout solide ", on pourra en trouver des exemples dans les brevet EP-867 752, EP-831 360, les brevets WO.00/57243 et WO.00/71777,
➢ celle où l'ensemble des couches est à base de polymères, catégorie que l'on désigne souvent sous le terme de système " tout polymère ".

Il existe aussi des systèmes appelés " valves optiques ". Il s'agit de films comprenant une matrice de polymère généralement réticulé dans laquelle sont dispersées des micro-gouttelettes contenant des particules qui sont capables de se placer selon une direction privilégiée sous l'action d'un champ magnétique ou électrique. Il est ainsi connu du brevet WO.93/09460 une valve optique comprenant une matrice en polyorganosilane et des particules du type polyiodure qui interceptent beaucoup moins la lumière quand le film est mis sous tension.

On peut aussi citer les systèmes dits à cristaux liquides, d'un mode de fonctionnement similaire aux précédents. Ils sont basés sur l'utilisation d'un film placé entre deux couches conductrices et à base d'un polymère dans lequel sont disposées des gouttelettes de cristaux liquides, notamment nématiques à anisotropie diélectrique positive. Les cristaux liquides, quand le film est mis sous tension, s'orientent selon un axe privilégié, ce qui autorise la vision. Hors tension, en l'absence d'alignement des cristaux, le film devient diffusant et empêche la vision. Des exemples de tels films sont décrits notamment dans les brevets européen EP-0 238 164, et américains US-4 435 047, US-4 806 922, US-4 732 456. Ce type de film, une fois feuilleté et incorporé entre deux substrats en verre, est commercialisé par la société Saint-Gobain Vitrage sous la dénomination commerciale " Priva-Lite ".

On peut en fait utiliser tous les dispositifs à cristaux liquides connus sous les termes de " NCAP " (Nematic Curvilinearly Aligned Phases) ou " PDLC " (Polymer Dispersed Liquid Cristal).

On peut également utiliser, par exemple, les polymères à cristaux liquides cholestériques, comme ceux décrits dans le brevet WO.92/19695.

Quant aux systèmes électroluminescents, ils comportent un matériau luminophore alimenté en électricité par des électrodes.

Tous ces systèmes confondus ont en commun la nécessité d'être équipés en amenées de courant venant alimenter des électrodes généralement sous forme de deux couches électroconductrices de part et d'autre de la couche ou des différentes couches active(s) du système.

Ces couches électroconductrices (qui peuvent en fait être une superposition de couches) comportent communément une couche à base d'oxyde d'indium, généralement l'oxyde d'indium dopé à l'étain plus connu sous l'abréviation ITO. Il peut aussi s'agir de couches à base d'oxyde d'étain dopé, par exemple à l'antimoine, ou encore à base d'oxyde de zinc dopé, par exemple à l'aluminium (ou d'un mélange à base d'au moins deux de ces oxydes).

On connaît par le document US-A- 5 202 788 un dispositif électrochrome dont les électrodes sont à base en ITO, ces électrodes pouvant être poreuses ou perforées.

On connaît par le document US-B-6 277 523 un dispositif électrochimique, dont la couche conductrice est en ITO ou en oxyde d'étain dopé au fluor ou plus généralement une couche en TCO (Transparent Conductive Oxide).

L'article (Thin solid Films, Chopra et Al, 102 (1983)) divulgue que la couche d'ITO est généralement sous forme amorphe et est donc non cristallisée et de taille nanométrique, surtout lorsque le substrat n'est pas chauffé.

Ces couches présentent une conductivité suffisante, et peuvent être aisément déposées par pulvérisation cathodique assistée par champ magnétique, soit à partir d'une cible d'oxyde (pulvérisation non réactive), soit à partir d'une cible à base d'indium et d'étain (pulvérisation réactive en présence d'un agent oxydant du type oxygène).

Le but que se fixe l'invention est de parvenir à améliorer les performances des systèmes électrochimiques/électrocommandables du type de ceux précédemment décrits(électrochromes, photovoltaiques, electroluminescents...), et plus particulièrement les systèmes électrochromes, notamment leurs performances optiques/énergétiques, leur vitesse de commutation, et/ou d'augmenter leur durée de vie. Accessoirement, il s'agit d'atteindre cet objectif sans bouleverser les configurations connues des systèmes électrochimiques concernant l'invention. Il s'agit, plus généralement, de mettre au point des électrodes sur substrat essentiellement transparent ( verre ou matériau polymère), qui soient meilleures.

L'invention a pour objet un dispositif électrochimique/électrocommandable, à propriétés optiques et/ou énergétiques variables, comportant au moins un substrat porteur muni d'une couche étectroactive ou d'un empilement de couches électroactives disposé(e) entre une électrode dite " inférieure " et une électrode dite " supérieure ". Selon l'invention, l'électrode " supérieure " comprend au moins une couche électroconductrice, de préférence transparente, à base d'oxyde d'indium dopé, notamment à l'étain, ou d'oxyde d'étain dopé, notamment à l'antimoine, ou d'oxyde de zinc dopé, notamment à l'aluminium. Ladite couche est au moins partiellement cristallisée sous forme de cristallites de taille moyenne comprise entre 5 et 100 nm, notamment d'au moins 20 nm et ladite couche à base d'oxyde d'indium de l'électrode supérieure contenant entre 5 et 15 % d'oxyde d'étain en poids par rapport à l'oxyde d'indium.

L'invention peut en fait s'appliquer plus généralement aux couches conductrices désignées sous l'abréviation anglaise de «TCO» pour « Transparent Conductive Oxide », c'est-à-dire des couches conductrices transparentes et à base d'oxyde(s) métallique(s).

On entend au sens de l'invention par électrode " inférieure ", l'électrode qui se trouve la plus proche du substrat porteur pris en référence, sur laquelle une partie au moins des couches actives (l'ensemble des couches actives dans un système électrochrome " tout solide ") est déposée. L'électrode " supérieure " est celle déposée de l'autre côté, par rapport au même substrat de référence.

Dans la suite du texte, par souci de concision, on désignera la couche à base d'oxyde d'indium ou à base d'oxyde d'étain ou à base d'oxyde de zinc de l'électrode supérieure par le terme " ITO supérieur ". Par convention cette appellation englobe aussi des oxydes d'indium dopés par un autre métal que l'étain.

Les inventeurs ont en effet découvert, de manière surprenante, l'influence que pouvait avoir la structure cristalline de l'ITO supérieur sur tout le reste du système électroactif. Il s'est avéré qu'une structure au moins partiellement cristalline, de surcroît présentant des cristallites de taille nanométrique, était beaucoup plus avantageuse qu'une structure amorphe par exemple.

Cette " nano-cristallisation " de l'ITO selon l'invention n'est pas toujours détectable par diffraction des rayons X. Dans le cas où elle n'est pas détectable aux rayons X, on peut avoir recours à d'autres techniques d'analyse. Il s'agit notamment de la Microscopie Electronique à Transmission (MET), ou encore de la technique appelée en anglais Selective Area Diffraction Pattern (S.A.E.D.).

En fait, cette cristallisation particulière est bénéfique vis-à-vis de la stabilité de l'ensemble du système électrochimique : on déposait fréquemment l'électrode supérieure, par exemple, par une technique sous vide de type pulvérisation cathodique au-dessus de toutes les autres couches du système électroactif. De fait, on avait donc tendance à privilégier les dépôts " à froid ", à température ambiante, et ceci pour au moins deux raisons :
➢ d'une part, on évitait ainsi de prendre le risque éventuel de dégrader les couches sous-jacentes,
➢ d'autre part, on obtenait " à froid " des niveaux de conductivité électrique satisfaisants.

On obtenait donc généralement des couches de type amorphe. Or les inventeurs ont montré qu'il fallait prendre en compte, non seulement la conductivité électrique de la couche, mais également sa stabilité électrochimique. Et les ITO supérieurs de type amorphes étaient, sans qu'on le sache, une cause d'instabilité et de vieillissement prématuré de certains systèmes électrochimiques.

Si, par contre, les ITO supérieurs sont déposés de façon à être " nano-cristallisés ", ils sont bien meilleurs, bien plus stables électrochimiquement. Cette découverte a permis d'améliorer significativement les performances des systèmes électrochimiques, notamment, pour les systèmes électrochromes, en augmentant leur durée de vie. On entend par là, notamment, que cela a permis d'allonger la période de temps jusqu'à laquelle la vitesse de commutation commence à baisser. Cela peut aussi être l'allongement de la période de temps jusqu'à laquelle la variation de transmission lumineuse et/ou énergétique commence à être d'amplitude plus réduite et/ou jusqu'à la valeur de transmission lumineuse et/ou énergétique à un état donné commence à dériver. Les inventeurs se sont aussi aperçus qu'avec ce type d'ITO supérieur, les systèmes électrochimiques étaient plus stables en température. C'est un point non négligeable, notamment quand il s'agit de vitrages électrochromes montés comme vitrages extérieurs de bâtiment ou toits automobile, ces vitrages étant susceptibles d'échauffement sous l'effet du soleil et de leur coloration qui les rend (au moins un peu) absorbants.

Avantageusement, l'ITO supérieur selon l'invention présente une résistivité électrique comprise entre 10⁻⁴ et 10⁻² ohm.cm, notamment une comprise entre 10⁻⁴ et 2.10⁻³ ohm.cm, ce qui rend son utilisation en tant qu'électrode parfaitement satisfaisante.

De préférence, notamment pour atteindre ce niveau de résistivité, elle a une épaisseur comprise entre 40 et 400 nm , notamment entre 50 et 300 nm ou entre 120 et 280 nm. Dans ces gammes d'épaisseur, l'ITO est transparent, c'est-à-dire qu'il présente une faible absorption lumineuse dans le visible. Il n'est cependant pas exclu d'avoir des couches nettement plus épaisses (notamment dans le cas où le système électroactif du type électrochrome fonctionne en réflexion plutôt qu'en transmission), ou des couches plus fines (notamment quand elles sont associées dans l'électrode à un autre type de couche conductrice, métallique par exemple).

Avantageusement, l'ITO contient entre 3 et 20 %, et de préférence d'environ 10% d'étain (ou d'un autre métal dopant) par rapport à l'indium. Ce pourcentage est exprimé en poids d'oxyde d'étain (d'oxyde du dopant) par rapport à l'oxyde d'indium (l'oxyde majoritaire). Cette gamme de pourcentage entre oxyde dopant et oxyde majoritaire est de préférence décalée vers des valeurs plus basses quand il s'agit d'une couche à base d'oxyde d'oxyde de zinc, notamment dopé à l'aluminium: on préfère dans ce cas un pourcentage en poids de Al₂O₃ compris entre 0,5 et 5 %, notamment 1 et 4 %, par rapport au ZnO. Un exemple consiste à choisir une proportion de 2% en poids d' Al₂O₃ par rapport au ZnO.

Selon une variante de l'invention, l'électrode inférieure comprend également une couche électroconductrice, de préférence transparente et à base d'un oxyde conducteur du même type que celui de l'électrode supérieure, comme l'oxyde d'indium dopé, notamment à l'étain ou l'oxyde d'étain dopé ou l'oxyde de zinc dopé, et cristallisé au moins partiellement, comme celle appartenant à l'électrode supérieure. On peut ainsi avoir deux couches à base d'ITO ou d'oxyde d'étain ou d'oxyde de zinc, une dans chacune des deux électrodes du système électroactif, et de mêmes caractéristiques. Cela présente notamment l'avantage de pouvoir déposer une succession de couches les unes après les autres, la première et la dernière (les couches d'ITO ou d'oxyde d'étain dopé ou d'oxyde de zinc dopé) étant déposées de la même manière, avec les mêmes paramètres de dépôt (notamment dans la même chambre de dépôt quand il s'agit de pulvérisation cathodique, en faisant passer deux fois le substrat porteur sous la même cible dans les mêmes conditions/réglages.

De préférence, l'électrode supérieure selon l'invention comporte d'autres éléments conducteurs que l'ITO supérieur : il peut s'agir plus particulièrement d'associer la couche d'ITO à une couche plus conductrice qu'elle, et/ou à une pluralité de bandes ou de fils conducteurs. On se reportera pour plus de détails au brevet WO-00/57243 précité pour la mise en oeuvre de telles électrodes multi-composantes. Un mode de réalisation préféré de ce type d'électrode consiste à appliquer sur la couche d'ITO (éventuellement surmontée d'une ou plusieurs autres couches conductrices) un réseau de fils conducteurs incrustés à la surface d'une feuille de polymère (qui pourra alors protéger le système actif et/ou permettre le feuilletage du substrat-porteur du type verre avec un autre verre dans le cas d'une fabrication de vitrage électroactif, du type électrochrome par exemple).

Comme mentionné plus haut, l'invention peut s'appliquer à différents types de systèmes électrochimiques ou étectrocommandables. Elle s'intéresse plus particulièrement aux systèmes électrochromes, notamment les "tout solide " ou les " tout polymère ", ou encore aux systèmes à cristaux liquides ou viologènes, ou encore aux systèmes électroluminescents..

Les systèmes, ou vitrages, électrochromes auxquels peut s'appliquer l'invention, sont décrits dans le brevets précités. Ils peuvent comporter au moins un substrat porteur et un empilement de couches fonctionnelles comprenant au moins successivement une première couche électroconductrice, une couche électrochimiquement active susceptible d'insérer réversiblement des ions tels que H⁺, Li⁺, OH- du type matériau électrochrome anodique ou respectivement cathodique, une couche d'électrolyte, une seconde couche électrochimiquement active susceptible d'insérer réversiblement des ions tels que H⁺, Li⁺, OH⁻ du type matériau électrochrome cathodique ou respectivement anodique, et une seconde couche électroconductrice, (le terme de " couche " est à comprendre comme une couche unique ou une superposition de plusieurs couches, continues ou discontinues).

L'invention concerne également l'incorporation des dispositifs électrochimiques décrits dans le préambule de la présente demande dans des vitrages, fonctionnant en réflexion (miroir) ou en transmission. Le terme "vitrage" est à comprendre au sens large et englobe tout matériau essentiellement transparent, en verre et/ou en matériau polymère (comme du polycarbonate PC ou du polymétacrylate de méthyle PMMA). Les substrats porteurs et/ou contre-substrats, c'est-à-dire les substrats encadrant le système actif, peuvent être rigides, flexibles ou semi-flexibles.

Si le vitrage fonctionne en réflexion, il peut notamment être utilisé comme miroir d'intérieur ou comme rétroviseur.

L'invention concerne également les diverses applications que l'on peut trouver à ces dispositifs, vitrages ou miroirs : il peut s'agir de faire des vitrages pour bâtiment, notamment des vitrages extérieurs, des cloisons internes ou des portes vitrées). Il peut aussi s'agir de fenêtres, toits ou cloisons internes de moyens de transport comme des trains, avions, voitures, bateaux. Il peut aussi s'agir d'écrans de visualisation ou d'affichage, comme des écrans de projection, des écrans de télévision ou d'ordinateur, des écrans tactiles. On peut aussi les utiliser pour faire des lunettes ou des objectifs d'appareil photo, ou encore pour protéger des panneaux solaires. On peut aussi les utiliser comme dispositifs de stockage d'énergie du type batterie, pile à combustible, batteries et piles elles-mêmes.

L'invention a également pour objet le procédé d'obtention du dispositif décrit plus haut, consistant à déposer l'ITO supérieur par pulvérisation cathodique assistée par champ magnétique, notamment à température ambiante. En effet, il est souvent choisi de déposer la couche d'ITO de l'électrode inférieure à chaud, car c'est la première couche de l'empilement et cela permet généralement d'obtenir des couches bien denses. Cependant, pour l'ITO supérieur, un dépôt à température ambiante est préférable, afin d'éviter d'avoir à chauffer des couches sous-jacentes susceptibles de se détériorer à haute température. Un chauffage à des températures modérées (30 à 220°C, notamment 50 à 200°C) est cependant possible, ou même à des températures plus élevées, si les couches sous-jacentes peuvent les supporter.

Avantageusement, la pression dans la chambre de dépôt lors du dépôt de l'ITO supérieur est inférieure à 1,2 Pa (1,2.10⁻² mbar), de préférence inférieure ou égale à 1 Pa (10⁻² mbar) ou à 0,8 Pa (8.10⁻³ mbar) ou à 0,5 Pa (5.10⁻³ mbar). La pression est avantageusement d'au moins 0,08 Pa (8.10⁻⁴ mbar) : il a été montré que déposer la couche d'ITO supérieur à de telles basses pressions permettait d'obtenir une couche dense et nano-cristallisée. Selon l'invention, il y a d'autres techniques, utilisant toujours la pulvérisation cathodique, pour parvenir à ce résultat : on peut ainsi utiliser un dépôt avec assistance ionique , utiliser des aimants déséquilibrés, et/ou, comme on l'a vu plus haut, chauffer (modérément) le substrat-porteur lors du dépôt.

Avantageusement, on dépose la couche (ou l'empilement de couches) fonctionnelle(s) et l'ITO supérieur (et même éventuellement l'électrode inférieure) par la même technique de dépôt. C'est notamment le cas pour des systèmes électrochromes dits " tout solide ".

L'invention sera maintenant décrite plus en détails à l'aide d'exemples non limitatifs et de figures :
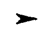 **Figure 1** : une vue schématique en coupe d'une cellule électrochrome utilisant un ITO supérieur conforme à l'invention,
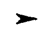 **Figure 2** : un graphe comparant le vieillissement de cellules électrochromes utilisant des ITO supérieurs conformes à l'invention et des ITO supérieurs amorphes,
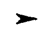 **Figure 3** : les clichés de diffraction électronique de l'ITO supérieur selon l'invention et selon un exemple comparatif.

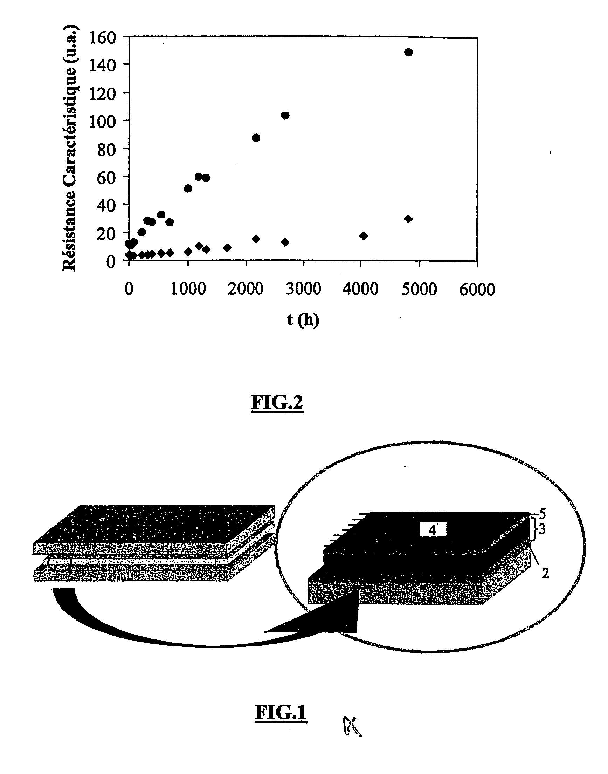

La figure 1 est volontairement très schématique et n'est pas nécessairement à l'échelle pour en faciliter la lecture : elle représente en coupe une cellule électrochrome " tout solide " comprenant successivement :
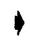 un verre de verre silico-sodo-calcique 1 clair de 2,1 mm d'épaisseur,
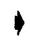 une électrode inférieure 2, qui est un bicouche constitué d'une première couche de SiOₓN_{y}, de 30 nm surmontée d'une seconde d'ITO (oxyde d'indium dopé à l'étain) de 250 nm,
le système électrochrome 3 comprend :
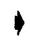 une première couche de matériau électrochrome anodique en oxyde d'iridium (hydraté) de 40 à 100 nm ou d'oxyde de nickel hydraté de 40 à 400 nm, alliée ou non à d'autres métaux,
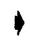 une couche en oxyde de tungstène de 100 nm,
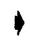 une seconde couche en oxyde de tantale hydraté ou d'oxyde de silice hydraté ou d'oxyde de zirconium hydraté de 100 nm,
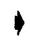 une seconde couche de matériau électrochrome cathodique à base d'oxyde de tungstène WO₃ de 370 nm,
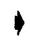 une électrode supérieure 4 constituée d'une couche d'ITO 5 de 270 nm et d'un réseau de fils conducteurs 6 incrustés à la surface d'une feuille 7 en polyuréthane PU de 1,24 mm d'épaisseur. Les fils conducteurs sont métalliques, parallèles entre eux et linéaires. Alternativement, ces fils peuvent être ondulés.

La feuille 7 de PU permet de feuilleter le verre 1 à un autre verre 8 de mêmes caractéristiques que le verre 1. Optionnellement, la face du verre 8 tournée vers la feuille de PU 7 est munie d'un empilement de couches minces à fonction de protection solaire. Cet empilement peut notamment comporter deux couches d'argent intercalées par des couches en diélectrique, de façon connue.

L'ensemble des couches a été déposé par pulvérisation cathodique assistée par champ magnétique. L'ITO inférieur a été déposé à chaud à 300°C.

### EXEMPLE 1

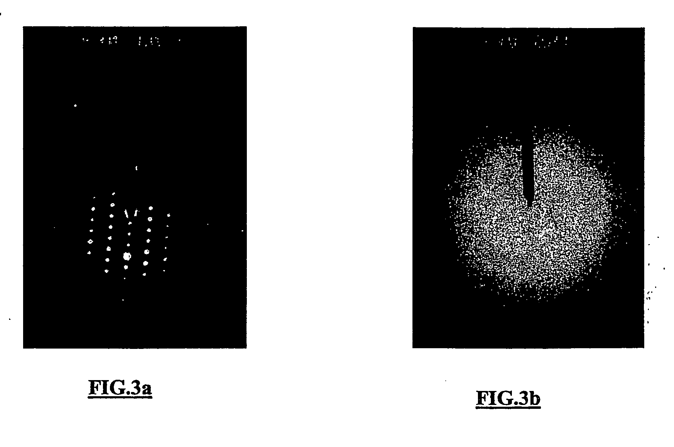

Dans ce cas, l'ITO de l'électrode supérieure a été déposé à température ambiante, avec une pression dans la chambre de dépôt de 0,4 Pa (4.10⁻³ mbar), à partir d'une cible en céramique ITO complètement oxydée, comprenant environ 10% en poids de SnO₂ par rapport à In₂O₃. La couche d'ITO a été analysée par diffraction électronique : le cliché de la figure 3a montre clairement des points, caractéristiques de cristallites de taille nanométrique.

### EXEMPLE 2 (comparatif)

Dans ce cas, l'ITO de l'électrode supérieure a été déposé à température ambiante, avec une pression dans la chambre de dépôt de 1,2 Pa (1,2.10⁻² mbar), à partir de la même cible que celle de l'exemple 1. La couche d'ITO a été analysée comme à l'exemple 1 : le cliché de la figure 3b montre l'absence ou la quasi-absence de points, ce qui est caractéristique d'une morphologie essentiellement amorphe.

Des tests comparatifs ont été effectués sur les deux cellules électrochromes.

Tout d'abord, on a étudié l'influence de la morphologie de l'ITO supérieur sur la variation d'un paramètre que l'on appelle la " résistance caractéristique " en fonction du temps. Cette résistance caractéristique RC est en fait l'inverse de la valeur de la vitesse de commutation quand on applique une tension donnée au bornes des électrodes. On peut aussi évaluer quand le système commence à " vieillir ".

Les résultats sont représentés en figure 2 : en abscisse, est donc représenté le temps en heures, et en ordonnée la RC avec une échelle allant de 0 à 160. Les tests ont été réalisés en faisant cycler les cellules électrochromes dans une étuve sèche à 5% d'humidité relative et à 80°C.

La courbe avec des ronds correspond à l'exemple 2 comparatif, la courbe avec des losanges correspond à l'exemple 1 selon l'invention : on voit que la courbe correspondant à l'exemple 2 commence à dériver rapidement dès les premières cent heures d'utilisation. Au contraire, la courbe correspondant à l'exemple selon l'invention est remarquablement plate jusqu'à 2000 heures, et tend à croître, mais très modérément, au-delà de 2000 jusqu'à 4000 heures : c'est un résultat exceptionnel, et cela prouve l'importance, jusque-là insoupçonnée, de la morphologie de l'ITO supérieur.

Un autre test a été réalisé : il a consisté à mesurer la variation de transmission lumineuse ΔT_{L} (en %, selon l'Illuminant D₆₅) entre t = 0 et t = 30, 500, 1000 et 5000 heures, quand on bloque les cellules à l'état coloré. Les résultats figurent dans le tableau 1 ci-dessous :

**TABLEAU 1**

| T (heures) | ΔTL - exemple 1 | ΔTL - exemple 2 comparatif |
|---|---|---|
| 30 | -2 | -12 |
| 500 | -6 | -15 |
| 1000 | -6 | -16 |
| 5000 | -8 | -17 |

Là encore, on voit que l'exemple selon l'invention est bien meilleur, avec une dérive de T_{L} qui reste inférieure à 10% après 5000 heures d'utilisation. La dérive est en plus progressive. Au contraire, l'exemple comparatif a déjà une dérive de plus de 10 % dès 30 heures d'utilisation.

Ces résultats montrent l'importance qu'il y a à stabiliser électrochimiquement cette couche d'ITO supérieur en la cristallisant, et en la densifiant : il est probable que la cristallisation de la couche est critique car elle organise la structure de l'oxyde, le rendant plus dense et donc plus stable (la maille cristallogaphique de l'ITO est cubique, avec un paramètre de maille de 10,226 Angstroems).

Des résultats aussi intéressants sont obtenus avec des électrodes supérieures (et inférieures aussi éventuellement) à base d'oxyde de zinc dopé à l'aluminium.

L'invention concerne aussi le substrat muni d'au moins une électrode du type décrit plus haut, in dépendamment du dispositif électrique/électrochimique dans lequel elle est incorporée ou destinée à être incorporée.

## Revendications

1. Dispositif électrochimique/électrocommandable à propriétés optiques et/ou énergétiques variables comportant au moins un substrat-porteur (1) muni d'une couche électroactive ou d'un empilement de couches électroactives (3) disposées entre une électrode (2) dite " inférieure " et une électrode (4) dite " supérieure ", l'électrode supérieure (4) comprend au moins une couche électroconductrice (5), notamment transparente, à base d'oxyde d'indium dopé, notamment à l'étain, ou d'oxyde d'étain dopé ou d'oxyde de zinc dopé , qui est au moins partiellement cristallisé sous forme de cristallites de taille moyenne comprise entre 5 et 100 nm, notamment entre 10 et 50 nm, notamment d'au moins 20 nm, **caractérisé en ce que** ladite couche (5) à base d'oxyde d'indium de L'électrode supérieure (4) contenant entre 5 et 15 % d'oxyde d'étain en poids par rapport à l'oxyde d'indium.

2. Dispositif selon la revendication 1, ***caractérisé en ce que*** la couche (5) à base d'oxyde d'indium dopé ou d'oxyde d'étain ou d'oxyde de zinc de l'électrode supérieure est majoritairement cristallisée.

3. Dispositif selon l'une des revendications précédentes, ***caractérisé en ce que*** la couche (5) à base d'oxyde d'indium dopé ou d'oxyde d'étain ou d'oxyde de zinc de l'électrode supérieure a une résistivité électrique comprise entre 10⁻⁴ et 10⁻² ohm.cm, notamment comprise entre 10⁻⁴ et 2.10⁻³ ohm.cm .

4. Dispositif selon l'une des revendications précédentes, ***caractérisé en ce que*** la couche (5) à base d'oxyde d'indium (4) a une épaisseur comprise entre 40 et 400 nm, notamment entre 50 et 300 nm.

5. Dispositif selon l'une des revendications 1 à 4, **caractérisé en ce que** la couche (5) est à base d'oxyde de zinc dopé à l'aluminium, et contient entre 0,5 et 5 % en poids d'oxyde d'aluminium par rapport à l'oxyde de zinc.

6. Dispositif selon l'une des revendications précédentes, ***caractérisé en ce que*** l'électrode inférieure (2) comprend une couche électroconductrice, notamment transparente, à base d'oxyde d'indium dopé, notamment à l'étain ou d'oxyde d'étain dopé ou d'oxyde de zinc dopé, et cristallisé au moins partiellement comme celle appartenant à l'électrode supérieure (4).

7. Dispositif selon l'une des revendications précédentes, ***caractérisé en ce que*** l'électrode supérieure (4) comprend, outre la couche à base d'oxyde d'indium dopé (5), au moins une autre couche électroconductrice et/ou une pluralité de bandes conductrices ou de fils conducteurs (6).

8. Dispositif selon l'une des revendications précédentes, ***caractérisé en ce qu'il*** s'agit d'un système électrochrome, notamment un système électrochrome " tout solide " ou un système électrochrome " tout polymère ", d'un système à cristaux liquides ou d'un système viologène, ou d'un système électroluminescent.

9. Vitrage ***caractérisé en ce qu'il*** incorpore le dispositif selon l'une des revendications précédentes.

10. Miroir, notamment rétroviseur, ***caractérisé en ce qu'il*** incorpore le dispositif selon l'une des revendications 1 à 8.

11. Utilisation du dispositif selon l'une des revendications 1 à 8 ou du vitrage selon la revendication 9 pour faire des vitrages pour bâtiment, des vitrages équipant des cloisons internes ou fenêtres ou toits ou équipant des moyens de transport du type avion, train, voiture, bateau, des écrans de visualisation/d'affichage comme des écrans d'ordinateur ou de télévision ou des écrans de projection, des écrans tactiles, pour faire des Lunettes ou des objectifs d'appareils photographiques ou des protections de panneaux solaires, ou des surfaces éclairantes.

12. Procédé d'obtention du dispositif selon l'une des revendications 1 à 8, ***caractérisé en ce qu'on*** dépose la couche (5) à base d'oxyde d'indium dopé ou d'oxyde d'étain dopé ou d'oxyde de zinc dopé de l'électrode supérieure (4) par pulvérisation cathodique assistée par champ magnétique, notamment à température ambiante.

13. Procédé selon la revendication 12, ***caractérisé en ce que*** la pression dans la chambre de dépôt lors du dépôt de ladite couche (5) à base d'oxyde dopé est inférieure à 1,2 Pa, et de préférence inférieure ou égale à 1 Pa ou 0,8 Pa.

14. Procédé selon la revendication 12 ou la revendication 13, ***caractérisé en ce qu'on*** dépose ladite couche (5) à base d'oxyde dopé avec assistance ionique et/ou utilisation de champ fort et/ou utilisation d'aimants déséquilibrés et/ou avec chauffage lors du dépôt.

15. Procédé selon l'une des revendications 12 à 14, ***caractérisé en ce qu'**on* dépose la couche électroactive ou l'empilement de couches électroactives (3) et la(les) couche(s) (2,5) à base d'oxyde d'indium dopé ou d'oxyde d'étain dopé ou d'oxyde de zinc dopé par pulvérisation cathodique.

## Claims

1. Electrochemical/electrically controllable device having variable optical and/or energy properties, comprising at least one carrier substrate (1) provided with an electroactive layer or a stack of electroactive layers (3) placed between an electrode (2) called the "lower" electrode and an electrode (4) called the "upper" electrode, the upper electrode (4) comprises at least one electronically conductive layer (5), especially a transparent one, based on doped indium oxide, especially tin-doped indium oxide, or on doped tin oxide or doped zinc oxide, which is at least partially crystallized in the form of crystallites having a mean size of between 5 and 100 nm, especially between 10 and 50 nm, especially at least 20 nm ***characterized in that*** said layer (5) based on indium oxide of the upper electrode (4) containing between 5 and 15% tin oxide by weight with respect to indium oxide.

2. Device according to Claim 1, ***characterized in that*** the layer (5) based on doped indium oxide or on tin oxide or on zinc oxide of the upper electrode is predominantly crystallized.

3. Device according to either of the preceding claims, ***characterized in* that** the layer (5) based on doped indium oxide or on tin oxide or on zinc oxide of the upper electrode has an electrical resistivity of between 10⁻⁴ and 10⁻² ohm.cm, especially between 10⁻⁴ and 2×10⁻³ ohm.cm.

4. Device according to one of the preceding claims, ***characterized in* that** the layer (5) based on indium oxide (4) has a thickness of between 40 and 400 nm, especially between 50 and 300 nm.

5. Device according to one of Claims 1 to 4, ***characterized in* that** the layer (5) is based on aluminum-doped zinc oxide and contains between 0.5 and 5% by weight of aluminum oxide with respect to zinc oxide.

6. Device according to one of the preceding claims, ***characterized in* that** the lower electrode (2) comprises an electronically conductive layer, especially a transparent one, based on doped indium oxide, especially tin-doped indium oxide, or on doped tin oxide or doped zinc oxide, and at least partially crystallized like that forming part of the upper electrode (4).

7. Device according to one of the preceding claims, ***characterized in that*** the upper electrode (4) comprises, apart from the layer (5) based on doped indium oxide, at least one other electronically conductive layer and/or a plurality of conducting bands or conducting wires (6).

8. Device according to one of the preceding claims, ***characterized in* that** it is an electrochromic system, especially an "all solid state" electrochromic system or an "all polymer" electrochromic system or a liquid-crystal system or a viologen-based system, or an electroluminescent system.

9. Glazing panel ***characterized in* that** it incorporates the device according to one of the preceding claims.

10. Mirror, especially a rear-view mirror, ***characterized in* that** it incorporates the device according to one of Claims 1 to 8.

11. Use of the device according to one of Claims 1 to 8 or of the glazing panel according to Claim 9 for making glazing panels for buildings, glazing panels equipping internal partitions or windows or roofs or equipping means of transportation of the aircraft, train, automobile or ship type, display screens, such as computer or television screens, or projection screens and touch-sensitive screens, and for making spectacles or lenses of photographic equipment or solar panel protection means, or illuminating surfaces.

12. Process for obtaining the device according to one of Claims 1 to 8, ***characterized in that*** the layer (5) based on doped indium oxide or on doped tin oxide or on doped zinc oxide of the upper electrode (4) is deposited by magnetically enhanced sputtering, especially at room temperature.

13. Process according to Claim 12, ***characterized in* that** the pressure in the deposition chamber during deposition of said doped-oxide-based layer (5) is less than 1.2 Pa and preferably less than or equal to 1 Pa or 0.8 Pa.

14. Process according to Claim 12 or Claim 13, ***characterized in* that** said doped-oxide-based layer (5) is deposited with ion assistance and/or the use of off-equilibrium magnets and/or heating during the deposition.

15. Process according to one of Claims 12 to 14, ***characterized in* that** the electroactive layer or the stack of electroactive layers (3) and the layer(s) (2, 5) based on doped indium oxide or doped tin oxide or doped zinc oxide are deposited by sputtering.

## Patentansprüche

1. Elektrochemische/elektrisch regelbare Vorrichtung mit veränderlichen optischen und/oder energetischen Eigenschaften, die mindestens ein Trägersubstrat (1) umfasst, das mit einer elektrisch aktiven Schicht oder einem Aufbau aus elektrisch aktiven Schichten (3) versehen ist, die (der) zwischen einer "unteren" Elektrode (2) und einer "oberen" Elektrode (4) angeordnet ist, wobei die obere Elektrode (4) mindestens eine insbesondere transparente elektrisch leitfähige Schicht (5) auf der Basis von speziell mit Zinn dotiertem Indiumoxid, dotiertem Zinnoxid oder dotiertem Zinkoxid umfasst, die wenigsten teilweise in Form von Kristalliten mit einer mittleren Größe von 5 bis 100 nm, insbesondere zwischen 10 und 50 nm, und insbesondere mindestens 20 nm kristallisiert ist, **dadurch gekennzeichnet, dass** diese Schicht (5) auf der Basis von Indiumoxid der oberen Elektrode (4) zwischen 5 und 15 Gew.-%, Zinnoxid, bezogen auf das Indiumoxid, enthält.

2. Vorrichtung nach Anspruch 1, **dadurch gekennzeichnet, dass** die Schicht (5) auf der Basis von dotiertem Indiumoxid, von Zinnoxid oder Zinkoxid der oberen Elektrode überwiegend kristallisiert ist.

3. Vorrichtung nach einem der vorhergehenden Ansprüche, **dadurch gekennzeichnet, dass** der spezifische elektrische Widerstand der Schicht (5) auf der Basis von dotiertem Indiumoxid, von Zinnoxid oder Zinkoxid der oberen Elektrode 10⁻⁴ bis 10⁻² Ohm·cm und insbesondere 10⁻⁴ bis 2·10⁻³ Ohm·cm beträgt.

4. Vorrichtung nach einem der vorhergehenden Ansprüche, **dadurch gekennzeichnet, dass** die Dicke der Schicht (5) auf der Basis von Indiumoxid (4) 40 bis 400 nm und insbesondere zwischen 50 und 300 nm beträgt.

5. Vorrichtung nach einem der Ansprüche 1 bis 4, **dadurch gekennzeichnet, dass** die Schicht (5) auf der Basis von mit Aluminium dotiertem Zinkoxid ist und zwischen 0,5 und 5 Gew.-% Aluminiumoxid, bezogen auf das Zinkoxid, enthält.

6. Vorrichtung nach einem der vorhergehenden Ansprüche, **dadurch gekennzeichnet, dass** die untere Elektrode (2) eine elektrisch leitfähige Schicht umfasst, die insbesondere transparent, auf der Basis von speziell mit Zinn dotiertem Indiumoxid, von dotiertem Zinnoxid oder dotiertem Zinkoxid und wenigstens teilweise wie diejenige, die zu der oberen Elektrode (4) gehört, kristallisiert ist.

7. Vorrichtung nach einem der vorhergehenden Ansprüche, **dadurch gekennzeichnet, dass** die obere Elektrode (4) außer der Schicht (5) auf der Basis von dotiertem Indiumoxid mindestens eine weitere elektrisch leitfähige Schicht und/oder eine Vielzahl von elektrisch leitfähigen Bändern oder leitfähigen Drähten (6) umfasst.

8. Vorrichtung nach einem der vorhergehenden Ansprüche, **dadurch gekennzeichnet, dass** es sich um ein elektrochromes System, insbesondere ein "vollständig festes" elektrochromes System oder ein "vollständig polymeres" elektrochromes System, ein Flüssigkristallsystem, ein Viologensystem oder ein elektrolumineszentes System handelt.

9. Glas, **dadurch gekennzeichnet, dass** es die Vorrichtung nach einem der vorhergehenden Ansprüche umfasst.

10. Spiegel, insbesondere Rückspiegel, **dadurch gekennzeichnet, dass** er die Vorrichtung nach einem der Ansprüche 1 bis 8 umfasst.

11. Verwendung der Vorrichtung nach einem der Ansprüche 1 bis 8 oder des Glases nach Anspruch 9 zur Herstellung von Gläsern für Gebäude, Gläsern, mit welchen Innenzwischenwände, Fenster oder Dächer oder Transportmittel vom Typ Flugzeug, Zug, Kraftfahrzeug und Schiff, Bildschirme/Anzeigeschirme wie Computer-, Fernseh- oder Projektionsbildschirme und berührungsempfindliche Bildschirme ausgestattet sind, und zur Herstellung von Brillen, Photoapparatobjektiven, Schutz von Solarzellenpanels oder von Leuchtflächen.

12. Verfahren zur Herstellung der Vorrichtung nach einem der Ansprüche 1 bis 8, **dadurch gekennzeichnet, dass** die Schicht (5) auf der Basis von dotiertem Indiumoxid, von dotiertem Zinnoxid oder dotiertem Zinkoxid der oberen Elektrode (4) durch magnetfeldgestützte Kathodenzerstäubung, insbesondere bei Umgebungstemperatur, aufgebracht wird.

13. Verfahren nach Anspruch 12, **dadurch gekennzeichnet, dass** der Druck in der Beschichtungskammer während des Aufbringens der Schicht (5) auf der Basis eines dotierten Oxids weniger als 1,2 Pa und vorzugsweise weniger als oder gleich 1 Pa oder 0,8 Pa beträgt.

14. Verfahren nach Anspruch 12 oder 13, **dadurch gekennzeichnet, dass** die Schicht (5) auf der Basis eines dotierten Oxids mit Ionenunterstützung und/oder Anwendung eines starken Feldes und/oder Verwendung von asymmetrischen Magneten und/oder mit Erhitzen während des Beschichtens aufgebracht wird.

15. Verfahren nach einem der Ansprüche 12 bis 14, **dadurch gekennzeichnet, dass** die elektrisch aktive Schicht oder der Aufbau aus elektrisch aktiven Schichten (3) und die Schicht(en) (2, 5) auf der Basis von dotiertem Indiumoxid, dotiertem Zinnoxid oder dotiertem Zinkoxid durch Kathodenzerstäubung aufgebracht werden.
